# EUROPEAN PATENT SPECIFICATION

(11) **EP 4 563 271 B1**
(45) Date of publication and mention of the grant of the patent: **08.04.2026**
(21) Application number: 23213372.8
(22) Date of filing: 30.11.2023
(51) Int. Cl.: B23B 51/00, B23B 51/02

(54) **ROTARY CUTTING TOOL WITH REPLACEABLE CUTTING HEAD**
ROTIERENDES SCHNEIDWERKZEUG MIT AUSWECHSELBAREM SCHNEIDKOPF
OUTIL DE COUPE ROTATIF AVEC TÊTE DE COUPE REMPLAÇABLE

(43) Date of publication of application: 04.06.2025
(73) Proprietor: AB Sandvik Coromant, 811 81 Sandviken (SE)
(72) Inventor: HARSTRÖM, Patrik, 811 81 Sandviken (SE); SVENSSON, André, 811 81 Sandviken (SE)
(74) Representative: Sandvik

(56) References cited:
- WO-A1-2018/122592
- WO-A1-2023/175004
- US-B2- 9 481 040

## Description

### FIELD OF THE INVENTION AND PRIOR ART

The present invention relates to a rotary cutting tool. A similar cutting tool is known from WO 2023/175004 A1.

Rotary cutting tools, such as drilling tools, may be composed of two separate parts, including an elongated tool body and a cutting head that is detachably attachable to the tool body at the front end thereof and thereby constitutes a replaceable tip of the cutting tool, wherein the cutting edges of the cutting tool are provided on the replaceable cutting head. Hereby, the major part of the cutting tool constituted by the tool body can be made of a comparatively inexpensive material, such as steel, whereas the smaller cutting head can be made of a harder and more expensive material, such as cemented carbide. Thus, the tool body is normally made of a softer and more deformable material than the cutting head. In a cutting tool of this type, the replaceable cutting head constitutes a wear part that makes contact with the workpieces and is subjected to wear during machining thereof and that can be discarded and replaced with a new cutting head when it has been worn out, whereas the tool body is intended to be re-used with new cutting heads multiple times.

In a rotary cutting tool with replaceable cutting head, the tool body may be provided with two or more axially projecting coupling legs at its front end, wherein the cutting head has a coupling portion that is configured to be received in a space between the coupling legs. During machining of a workpiece with a rotary cutting tool of this type, torque is transferred from the tool body to the cutting head by means of torque transfer surfaces on a respective one of the coupling legs and corresponding torque surfaces on the cutting head, wherein the torque transfer surface on each coupling leg is configured to abut against a corresponding torque surface on the cutting head when the cutting head is attached to the tool body. The torque transfer surfaces on the coupling legs and the corresponding torque surfaces on the cutting head are normally flat with the aim of having a flat contact between the torque transfer surface on each coupling leg and the associated torque surface on the cutting head. However, due to manufacturing tolerances, it is difficult to obtain a perfectly flat contact between the flat torque transfer surfaces and the flat torque surfaces, which makes it difficult to predict the location of the actual contact area between each torque transfer surface and the associated torque surface on the interface between these surfaces.

In a rotary cutting tool of the above-mentioned type, the cutting head may be fixed to the tool body by means of a separate fastening member, for instance in the form of a screw. However, in a rotary cutting tool of the above-mentioned type, the coupling portion of the cutting head is normally configured to be fixed to the coupling legs of the tool body by press fit, as illustrated for instance in US 8 430 609 B2, wherein the coupling portion of the cutting head is rotatable in said space between the coupling legs between a disengagement position, in which external clamping surfaces on the coupling portion of the cutting head are disengaged from corresponding internal clamping surfaces on the coupling legs and the torque surfaces on the cutting head are separated from the corresponding torque transfer surfaces on the coupling legs, and an engagement position, in which the external clamping surfaces on the coupling portion of the cutting head are in press fit engagement with the internal clamping surfaces on the coupling legs and the torque surfaces on the cutting head abut against the corresponding torque transfer surfaces on the coupling legs. Hereby, the cutting head may be attached to and released from the tool body in a simple and quick manner by being rotated in relation to the tool body about the centre axis of the cutting head. During the rotation of the cutting head from the disengagement position to the engagement position, the coupling legs are subjected to a slight elastic deflection radially outwards, i.e. a slight elastic bending in relation to the centre axis of the tool body, which in its turn implies that the coupling legs will exert a resilient clamping force on the coupling portion of the cutting head when the coupling portion of the cutting head is in the engagement position and thereby keep the cutting head attached to the tool body. The small elastic deflection of the coupling legs radially outwards in connection with the rotation of the coupling portion or the cutting head into the engagement position also results in a corresponding small movement of the torque transfer surface on each coupling leg. During each rotation of a cutting head from the disengagement position to the engagement position, i.e. each time a worn out cutting head is replaced with a new cutting head, the internal clamping surfaces on the coupling legs are subjected to deformation, by wear and embossing, by the corresponding external clamping surfaces on the cutting head, which is of harder and more wear-resistant material than the tool body. The internal clamping surfaces on the coupling legs may also be subjected to some wear and embossing at the interface with the corresponding external clamping surfaces on the cutting head during the machining of workpieces. This gradual deformation of the internal clamping surfaces on the coupling legs implies that said elastic deflection of the coupling legs, and thereby also the exact orientation of the torque transfer surfaces in relation to the centre axis of the tool body when the coupling portion of the cutting head is in said engagement position, will vary in course of time, which makes it impossible to obtain a perfectly flat contact between the torque transfer surfaces on the coupling legs and the torque surfaces on the cutting head in a rotary cutting tool of this type.

WO 2023/175004 A1 discloses a rotary cutting tool comprising an elongated tool body and a replaceable cutting head detachably attachable to the tool body, wherein:
- the tool body has a rear end configured for attachment to a machine and an opposite front end, wherein a longitudinal centre axis of the tool body extends between the rear end and the front end of the tool body;
- the tool body at its front end has a coupling portion with two or more coupling legs projecting in the axial direction of the tool body and distributed about the centre axis of the tool body;
- the cutting head has a coupling portion, which is designed for engagement with the coupling portion of the tool body and which is receivable in a space between said coupling legs; and
- each coupling leg is provided with a torque transfer surface for transferring torque from the tool body to the cutting head, which torque transfer surface is
configured to abut against a corresponding torque surface on the cutting head when the cutting head is attached to the tool body with the coupling portion of the cutting head received in said space between the coupling legs and with a centre axis of the cutting head coinciding with the centre axis of the tool body, wherein each one of the torque transfer surfaces on the coupling legs are convex, as seen in any plane that is perpendicular to the centre axis of the tool body.

### OBJECT OF THE INVENTION

The object of the present invention is to provide a rotary cutting tool of the above-mentioned type that has a new and favourable design.

### SUMMARY OF THE INVENTION

According to the invention, said object is achieved by means of a rotary cutting tool having the features defined in claim 1.

The rotary cutting tool according to the invention comprises an elongated tool body and a replaceable cutting head detachably attachable to the tool body, wherein:
- the tool body has a rear end configured for attachment to a machine and an opposite front end, wherein a longitudinal centre axis of the tool body extends between the rear end and the front end of the tool body;
- the tool body at its front end has a coupling portion with two or more coupling legs projecting in the axial direction of the tool body and distributed about the centre axis of the tool body;
- the cutting head has a coupling portion, which is designed for engagement with the coupling portion of the tool body and which is receivable in a space between said coupling legs; and
- each coupling leg is provided with a torque transfer surface for transferring torque from the tool body to the cutting head, which torque transfer surface is configured to abut against a corresponding torque surface on the cutting head when the cutting head is attached to the tool body with the coupling portion of the cutting head received in said space between the coupling legs and with a centre axis of the cutting head coinciding with the centre axis of the tool body.

Thus, the coupling portion of the tool body and the coupling portion of the cutting head are so adapted to each other that the centre axis of the cutting head coincides with the centre axis of the tool body when the cutting head is properly attached to the tool body. According to the invention:
- each one of the torque transfer surfaces on the coupling legs are convex, and each of the torque surfaces on the cutting head are flat, as seen in any plane that is perpendicular to their respective centre axis; or
- the torque transfer surfaces on each one of the coupling legs are flat, and each of the torque surfaces on the cutting head are convex, as seen in any plane that is perpendicular to their respective centre axis.

Thus, at least one of the torque surface and the torque transfer surface in each pair of mutually abutting torque transferring contact surfaces of the tool body and the cutting head is convex as seen in planes perpendicular to the centre axis of the tool body and perpendicular to the centre axis of the cutting head, which implies that the torque surface and the torque transfer surface in each pair will be in contact with each other along an elongated area that extends in the axial direction of the rotary cutting tool, i.e. in the axial direction of the tool body and in the axial direction of the cutting head. The convexity of the torque surface and/or torque transfer surface in each pair makes it possible, on one hand, to predict, with very good accuracy, the location of the actual contact area between each torque transfer surface and the associated torque surface on the interface between these surfaces, and, on the other hand, to adapt these surfaces to each other in such a manner that the actual contact area between each torque transfer surface and the associated torque surface will be in a desired and predefined location on the interface between these surfaces that is favourable with respect to the structural strength of the cutting head and the tool body and also favourable with respect to the transfer of torque from the tool body to the cutting head. When the tool body is in a brand new condition, i.e. when it has not previously been connected to any cutting head and has still not been used for machining of any workpiece, and a cutting head for the first time is attached to the tool body, each torque transfer surface and the associated torque surface will be in contact with each other along a linear, or at least essentially linear, and very narrow contact area. During the machining of workpieces, each torque transfer surface of the tool body will be subjected to wear and embossing at the interface with the associated torque surface, which will cause said linear, or essentially linear, contact area to gradually and slowly grow wider and wider.

As mentioned above, it is difficult and sometimes not even possible to obtain a perfectly flat contact between flat torque transfer surfaces on the coupling legs of a tool body and flat torque surfaces on a cutting head in a rotary cutting tool with replaceable cutting head. With such flat torque transfer surfaces and torque surfaces, the actual contact area between each torque transfer surface and the associated torque surface will normally be essentially linear and extend in the axial direction of the cutting tool at the radially outermost part or the radially innermost part of the interface between each torque transfer surface and the associated torque surface. When the contact area happens to be located at the radially outermost part of said interface, the cutting head will be subjected to high pressure and high compressive stress at a part of its periphery where it is normally rather weak, which may cause destructive cracks in the cutting head. When the contact area happens to be located at the radially innermost part of said interface, the force exerted by the coupling leg on the cutting head at the interface between the torque transfer surface and the associated torque surface will have a rather short moment arm, which implies that the coupling leg has to exert a rather high force on the cutting head for the achievement of the required torque on the cutting head. An increase of the force at the interface between the torque transfer surface and the associated torque surface may cause undesired damages to the coupling leg. With the solution according to the present invention and the associated ability to achieve a predefined and suitable location of the contact area between each torque transfer surface and the associated torque surface, the above-mentioned problems may be avoided.

According to a first alternative, the torque transfer surfaces on the coupling legs are flat and the torque surfaces on the cutting head are convex. According to a second alternative, the torque transfer surfaces on the coupling legs are convex and the torque surfaces on the cutting head are flat.

Each one of said convex torque surfaces and/or convex torque transfer surfaces is preferably cylindrical.

According to a preferred embodiment of the invention, each one of said convex torque surfaces and/or convex torque transfer surfaces has a radius of curvature that is larger than the diameter of the cutting head and no more than twenty times larger than the diameter of the cutting head, preferably between two and ten times larger than the diameter of the cutting head. The diameter of the cutting head here refers to the diameter of a right circular cylinder circumscribing the cutting head. A radius of curvature of the convex surfaces within said range is favourable with respect to the embossing caused on each torque transfer surface of the tool body at the interface with the associated torque surface on the cutting head. A radius of curvature within said range also implies that the clearance between each torque transfer surface of the tool body and the associated torque surface on the cutting head on either side of the contact area between these surfaces will remain sufficiently small to avoid ingress of dirt into the interface between these surfaces.

Said torque surfaces and torque transfer surfaces are preferably so arranged on the cutting head and the tool body, respectively, that each one of the torque surfaces extends in parallel with the centre axis of the cutting head and each one of the torque transfer surfaces extends in parallel with the centre axis of the tool body.

According to another preferred embodiment of the invention, said coupling legs are two in number and arranged opposite to each other on opposite sides of the centre axis of the tool body, wherein said torque surfaces on the cutting head are two in number and arranged on opposite sides of the centre axis of the cutting head.

Another preferred embodiment of the invention is characterized in:
- that two convex external clamping surfaces are provided on the coupling portion of the cutting head opposite to each other on opposite sides of the centre axis of the cutting head, wherein these external clamping surfaces are configured to be in press fit engagement with an internal clamping surface on an inner side of a respective one of the two coupling legs when the cutting head is attached to the tool body; and
- that the coupling portion of the cutting head is rotatable in said space between the two coupling legs about the centre axis of the cutting head between a disengagement position, in which the external clamping surfaces on the coupling portion of the cutting head are disengaged from the internal clamping surfaces on the coupling legs and the torque surfaces on the cutting head are separated from the corresponding torque transfer surfaces on the coupling legs, and an engagement position, in which the external clamping surfaces on the coupling portion of the cutting head are in press fit engagement with the internal clamping surfaces on the coupling legs and the torque surfaces on the cutting head abut against the corresponding torque transfer surfaces on the coupling legs.

As explained above, it is impossible to obtain a perfectly flat contact between flat torque transfer surfaces on the coupling legs and flat torque surfaces on the cutting head in a rotary cutting tool of this type where the coupling portion of the cutting head is configured to be in press fit engagement with the coupling legs of the tool body when the cutting head is attached to the tool body. Thus, the invention is particularly favourable for application to a rotary cutting tool of this specific type. However, the cutting head of a rotary cutting tool of the present invention may as an alternative be configured to be fixed to the coupling legs of the tool body by means of a separate fastening member, for instance in the form of a screw, or in any other suitable manner.

Each one of said external clamping surfaces is convex as seen in cross-sectional planes through the coupling portion of the cutting head perpendicularly to the centre axis of the cutting head, which implies that the external clamping surfaces are convex as seen in every cross-sectional plane through the coupling portion of the cutting head that is perpendicular to the centre axis of the cutting head and intersects the external clamping surfaces. Each one of said internal clamping surfaces is concave as seen in cross-sectional planes through the coupling legs perpendicularly to the centre axis of the tool body, which implies that the internal clamping surfaces are concave as seen in every cross-sectional plane through the coupling legs that is perpendicular to the centre axis of the cutting head and intersects the internal clamping surfaces.

According to another preferred embodiment of the invention, each one of the coupling legs is provided with an axial locking member that is configured to fit with a corresponding axial locking member on the coupling portion of the cutting head when the coupling portion of the cutting head is in said engagement position in said space between the coupling legs to thereby form an axial lock between the cutting head and the tool body and prevent the coupling portion of the cutting head from moving out of the space between the coupling legs in the axial direction of the tool body when being in said engagement position in this space. By means of the axial locking members, a positive locking in axial direction between the tool body and the cutting head is achieved. This positive locking prevents the cutting head from being displaced in axial direction away from the tool body, for instance when the cutting tool is pulled out of a bore drilled by means of the cutting tool. The axial locking member of each coupling leg preferably has the form of an elongated recess formed in the coupling leg on the inner side thereof, wherein the corresponding axial locking member of the cutting head has the form of an external projection on the coupling portion of the cutting head.

**Another** preferred embodiment of the invention is characterized in:
- that each one of said torque transfer surfaces has an outer edge that extends in the axial direction of the tool body and an opposite inner edge that extends in the axial direction of the tool body and is located closer to the centre axis of the tool body than said outer edge; and
- that each one of said torque transfer surfaces has such an orientation in relation to the centre axis of the tool body that, as seen in any plane that is perpendicular to the centre axis of the tool body and extends across the torque transfer surface, a rectilinear first reference line that extends from the outer edge of the torque transfer surface to the inner edge thereof is inclined forward in an intended direction of rotation of the rotary cutting tool, as seen in a direction along the first reference line from the outer edge of the torque transfer surface to the inner edge thereof, in relation to a rectilinear second reference line that extends from the outer edge of the torque transfer surface to the centre axis of the tool body.

The above-mentioned inclination of the torque transfer surfaces on the coupling legs results in that the cutting head, through the torque surfaces and the torque transfer surfaces, will exert a force on each coupling leg directed towards the centre of the cutting tool during machining of a workpiece, which in its turn will cause the internal clamping surfaces on the coupling legs to be pressed against the corresponding external clamping surfaces on the cutting head. Hereby, the mutual clamping between these clamping surfaces is promoted. The angle between said first reference line and said second reference line is preferably 10-30°.

The torque surfaces on the cutting head are suitably inclined in correspondence with the above-mentioned inclination of the torque transfer surfaces, wherein:
- each one of said torque surfaces has an outer edge that extends in the axial direction of the cutting head and an opposite inner edge that extends in the axial direction of the cutting head and is located closer to the centre axis of the cutting head than the outer edge of the torque surface; and
- each one of said torque surfaces has such an orientation in relation to the centre axis of the cutting head that, as seen in any plane that is perpendicular to the centre axis of the cutting head and extends across the torque surface, a rectilinear third reference line that extends from the outer edge of the torque surface to the inner edge thereof is inclined forward in the intended direction of rotation of the rotary cutting tool, as seen in a direction along the third reference line from the outer edge of the torque surface to the inner edge thereof, in relation to a rectilinear fourth reference line that extends from the outer edge of the torque surface to the centre axis of the cutting head.

When the torque surfaces on the cutting head are inclined in this manner, the cutting head will normally have rather low structural strength at the region of the outer edge of each torque surface, which implies that this type of cutting head is rather sensitive to cracks at the region of the outer edge of each torque surface. Thus, the invention is favourable for application to a rotary cutting tool with this type of cutting head.

The angle between said third reference line and said fourth reference line is preferably the same, or at least essentially the same, as the angle between said first reference line and said second reference line.

According to another preferred embodiment of the invention, each one of the coupling legs is provided with an axial support surface that is facing axially forward and configured to abut against a corresponding axial abutment surface on the cutting head when the cutting head it attached to the tool body. The axial support surfaces on the coupling legs are configured to support the cutting head in axial direction and carry axial forces when the cutting head is pressed against a workpiece.

Further advantageous features of the rotary cutting tool according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a perspective view of a rotary cutting tool according to an embodiment of the present invention,
- Fig 2: is a front end view of the rotary cutting tool of Fig 1,
- Figs 3a and 3b: are perspective views from different directions of a front part of the rotary cutting tool of Fig 1, with a cutting head and a tool body included in the rotary cutting tool shown separated from each other,
- Fig 4: is a cut through a front part of the rotary cutting tool according to the line IV-IV in Fig 2,
- Fig 5: is a cut through a front part of the tool body corresponding to Fig 4, but with the cutting head removed,
- Fig 6: is a front end view of the tool body included in the rotary cutting tool of Fig 1,
- Fig 7: is a cut through a front part of the tool body according to the line VII-VII in Fig 6,
- Figs 8a and 8b: are perspective views from different directions of the cutting head included in the rotary cutting tool of Fig 1,
- Fig 8c: is a lateral view of the cutting head of Figs 8a and 8b,
- Fig 8d: is a plan view from above of the cutting head of Figs 8a and 8b,
- Fig 8e: is a plan view from below of the cutting head of Figs 8a and 8b,
- Fig 9a: is a lateral view of a front part of the rotary cutting tool of Fig 1, with a coupling portion of the cutting head shown in the disengagement position,
- Fig 9b: is a cut according to the line IXb-IXb in Fig 9a,
- Fig 9c: is a cut according to the line IXc-IXc in Fig 9a,
- Fig 10a: is a lateral view corresponding to Fig 9a, with the coupling portion of the cutting head shown in the engagement position,
- Fig 10b: is a cut according to the line Xb-Xb in Fig 10a,
- Fig 10c: is a cut according to the line Xc-Xc in Fig 10a, and
- Fig 11: is a detail enlargement according to the circle XI in Fig 10c.

### DETAILED DESCRIPTION OF EMBODIMENTS OF THE INVENTION

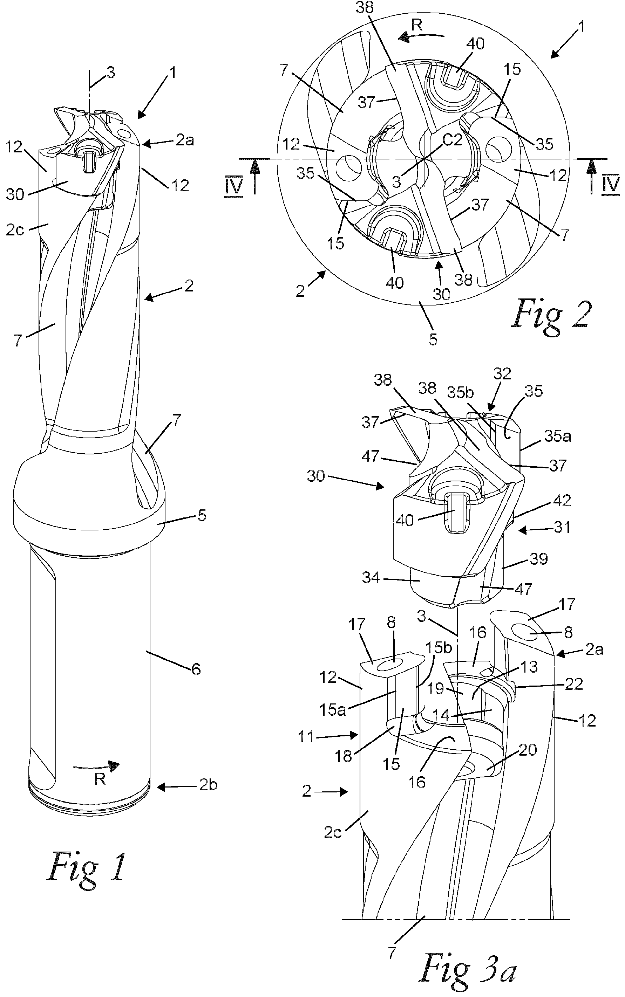

The rotary cutting tool 1 according to the present invention is intended to be rotated for machining of a workpiece by cutting. An embodiment of a cutting tool 1 according to the present invention is illustrated in Figs 1-11. In the illustrated example, the rotary cutting tool 1 is designed as twist drills, but the cutting tool of the invention could also be designed as another type of tool for rotary cutting machining.

The cutting tool 1 comprises an elongated tool body 2 and a replaceable cutting head 30 detachably attachable to the tool body 2 at a front end thereof. In Fig 1, the cutting tool 1 is shown with the cutting head 30 mounted to the tool body 2 and with the cutting tool 1 ready for machining of a workpiece. The cutting tool 1 is configured to be rotated about an axis of rotation 3. The intended direction of rotation of the cutting tool 1 for machining is marked with the arrow R in Figs 1, 2, 9b, 9c and 10c. The direction of rotation R constitutes the direction in which the cutting tool 1 is intended to be rotated about the axis of rotation 3 in order to achieve cutting machining of a workpiece.

The cutting head 30 is made of hard and wear-resistant material, preferably cemented carbide, and the tool body 2 is preferably made of steel or other suitable metallic material.

The tool body 2 has a front end 2a and an opposite rear end 2b. A longitudinal centre axis C1 of the tool body 2 extends between the rear end 2b and the front end 2a of the tool body, wherein this centre axis C1 coincides with the axis of rotation 3 of the cutting tool 1. In the illustrated embodiment, a collar 5 is provided on the tool body 2. A rear part 6 of the tool body 2 located between the collar 5 and the rear end 2b forms a connection member, through which the tool body 2 is mountable, directly or via an intermediate tool holder, to a rotating spindle or the similar of a drilling machine or other type of machine tool. The tool body 2 has a peripheral surface 2c. In the illustrated embodiment, the tool body 2 has 180° rotational symmetry about the centre axis C1 of the tool body and the cutting head 30 has 180° rotational symmetry about a centre axis C2 of the cutting head. The centre axis C2 of the cutting head 30 coincides with the axis of rotation 3 of the cutting tool 1 when the cutting head 30 is attached to the tool body 2.

At its front end 2a, the tool body 2 has a coupling portion 11 designed for engagement with a corresponding coupling portion 31 of the cutting head 30. In the illustrated embodiment, the coupling portion 11 of the tool body 2 comprises two elastically bendable coupling legs 12, which project in the axial direction of the tool body 2 and are arranged opposite to each other on opposite sides of the centre axis C1 of the tool body. Between the coupling legs 12, there is a space 13 designed for receiving the coupling portion 31 of the cutting head 30. Two internal clamping surfaces 14 are provided in said space 13 opposite to each other on opposite sides of the centre axis C1 of the tool body 2, wherein these internal clamping surfaces 14 are formed on an inner side of a respective one of the coupling legs 12. The inner side of a coupling leg 12 here refers to the side of the coupling leg that faces towards the centre axis C1 of the tool body 2. Each internal clamping surface 14 is concave as seen in every cross-sectional plane through the coupling legs 12 that is perpendicular to the centre axis C1 of the tool body 2 and intersects the internal clamping surfaces 14.

The cutting head 30 has a coupling portion 31, which is designed for engagement with the coupling portion 11 of the tool body 2 and which is receivable in the above-mentioned space 13 between the coupling legs 12. In the illustrated embodiment, two cylindrical external clamping surfaces 34 are provided on the coupling portion 31 of the cutting head 30 opposite to each other on opposite sides of the centre axis C2 of the cutting head 30. Each external clamping surface 34 is convex as seen in every cross-sectional plane through the cutting head 30 that is perpendicular to the centre axis C2 of the cutting head and intersects the external clamping surfaces 34.

The external clamping surfaces 34 on the cutting head 30 are configured to be in press fit engagement with a respective one of the internal clamping surface 14 on the coupling legs 12 when the cutting head 30 is attached to the tool body 2. Thus, the shape of each external clamping surface 34 is so adapted to the shape of the associated internal clamping surface 14 that it will mate with the associated internal clamping surface 14 and make contact with it with press fit, also known as interference fit of friction fit, when the coupling portion 31 of the cutting head 30 is brought into engagement with the coupling portion 11 of the tool body 2.

Each coupling leg 12 is provided with a torque transfer surface 15 for transferring torque from the tool body 1 to the cutting head 30, which torque transfer surface 15 is designed for abutment against a corresponding torque surface 35 on the cutting head 30 in order to transfer torque from the tool body 2 to the cutting head 30 during rotation of the cutting tool 1 in the intended direction of rotation R.

One or more forwardly facing axial support surfaces 16 are also provided at the front part of the tool body 2 on the coupling legs 12 or between the coupling legs 12, wherein each such axial support surface 16 is designed for abutment against a corresponding axial abutment surface 36 on the cutting head 30 in order to support the cutting head 30 in axial direction and carry axial forces when the cutting head 30 is pressed against a workpiece. In the illustrated embodiment, each one of the coupling legs 12 is provided with such an axial support surface 16 that is configured to abut against a corresponding axial abutment surface 36 on the cutting head 30 when the cutting head it attached to the tool body 2. In the illustrated embodiment, the axial support surface 16 of each coupling leg 12 is slightly inclined in relation to a cross-sectional plane through the coupling legs 12 that is perpendicular to the centre axis C1 of the tool body 2. However, the axial support surface 16 of each coupling leg 12 may as an alternative extend perpendicularly to the centre axis C1 of the tool body 2.

In the illustrated embodiment, the axial support surface 16 of each coupling leg 12 is located at a higher axial position on the coupling leg 12 than the internal clamping surface 14 of the coupling leg and at a lower axial position on the coupling leg 12 than the torque transfer surface 15 of the coupling leg. Thus, in this case, the torque transfer surface 15 of each coupling leg 12 is located at a position on the coupling leg between the axial support surface 16 of the coupling leg and an upper end face 17 of the coupling leg. Furthermore, in the illustrated embodiment, the axial support surface 16 of each coupling leg 12 borders on the torque transfer surface 15 of the coupling leg, wherein an undercut groove 18 is formed in the coupling leg 12 between the axial support surface 16 and the torque transfer surface 15.

At its front end, the detachable and replaceable cutting head 30 has a cutting portion 32, which is provided with at least one cutting edge 37 that extends in a substantially radial direction of the cutting head 30. In the illustrated embodiment, the cutting head 30 is provided with two such cutting edges 37. A clearance surface 38 is arranged on the cutting portion 32 behind each cutting edge 37, as seen in the intended direction of rotation R of the cutting tool 1. The above-mentioned coupling portion 31 of the cutting head 30, which is receivable in the space 13 between the coupling legs 12, is located below the cutting portion 32. The above-mentioned external clamping surfaces 34 are provided on the coupling portion 31 of the cutting head 30 on either side of the centre axis C2 of the cutting head 30. Furthermore, the coupling portion 31 of the cutting head 30 is provided with two torque surfaces 35 arranged on opposite sides of the centre axis C2 of the cutting head, each of which being designed for abutment against the torque transfer surface 15 on one of the coupling legs 12 of the tool body 2. The coupling portion 31 of the cutting head 30 is also provided with two axial abutment surfaces 36 arranged on opposite sides of the centre axis C2 of the cutting head, each of which being designed for abutment against the axial support surface 16 on one of the coupling legs 12 of the tool body 2.

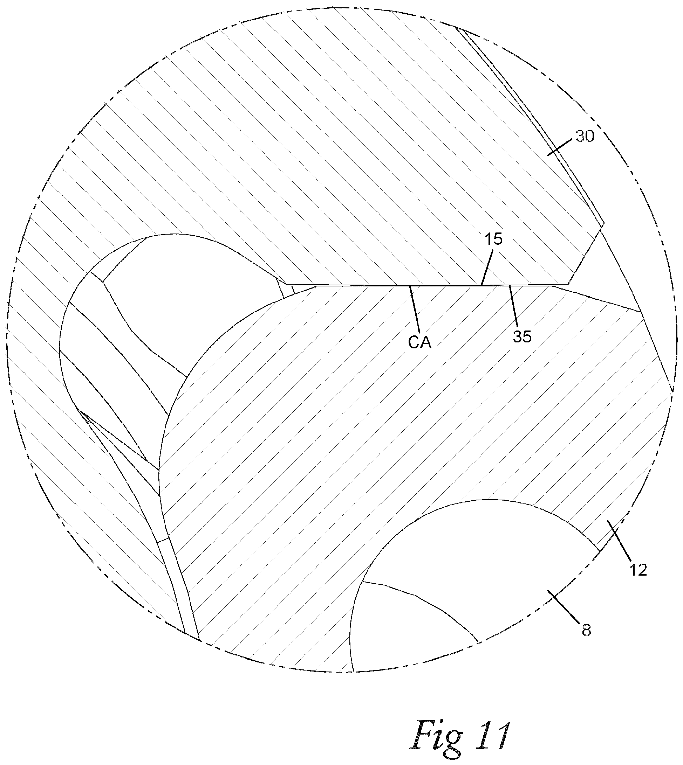

In the illustrated embodiment, the torque transfer surface 15 on each one of said coupling legs 12 is flat, wherein each torque surfaces 35 on the cutting head 30 is convex as seen in any plane that is perpendicular to the centre axis C2 of the cutting head and extends across the torque surface 35. Due to the convexity of the torque surfaces 35, each torque surface 35 will, when abutting against the associated torque transfer surface 15 on one of the coupling legs 12, be in contact with the associated torque transfer surface 15 along an elongated area CA that extends in the axial direction of the rotary cutting tool 1, i.e. in the axial direction of the tool body 2 and in the axial direction of the cutting head 30. As illustrated in Fig 11, there will be a small clearance between the torque surface 35 and the associated torque transfer surface 15 on either side of the contact area CA between these surfaces 35, 15. When the tool body 2 is in a brand new condition, i.e. when it has not previously been connected to any cutting head 30 and has still not been used for machining of any workpiece, and a cutting head 30 for the first time is attached to the tool body 2, each torque surface 35 and the associated torque transfer surface 15 will be in contact with each other along a linear, or at least essentially linear, and very narrow contact area CA. During the machining of workpieces, each torque transfer surface 15 of the tool body 2 will be subjected to wear and embossing at the interface with the associated torque surface 35, which will cause said linear, or essentially linear, contact area CA to gradually grow wider in course of time, which implies that the clearance between the torque surface 35 and the associated torque transfer surface 15 on either side of the contact area CA is gradually decreased in course of time.

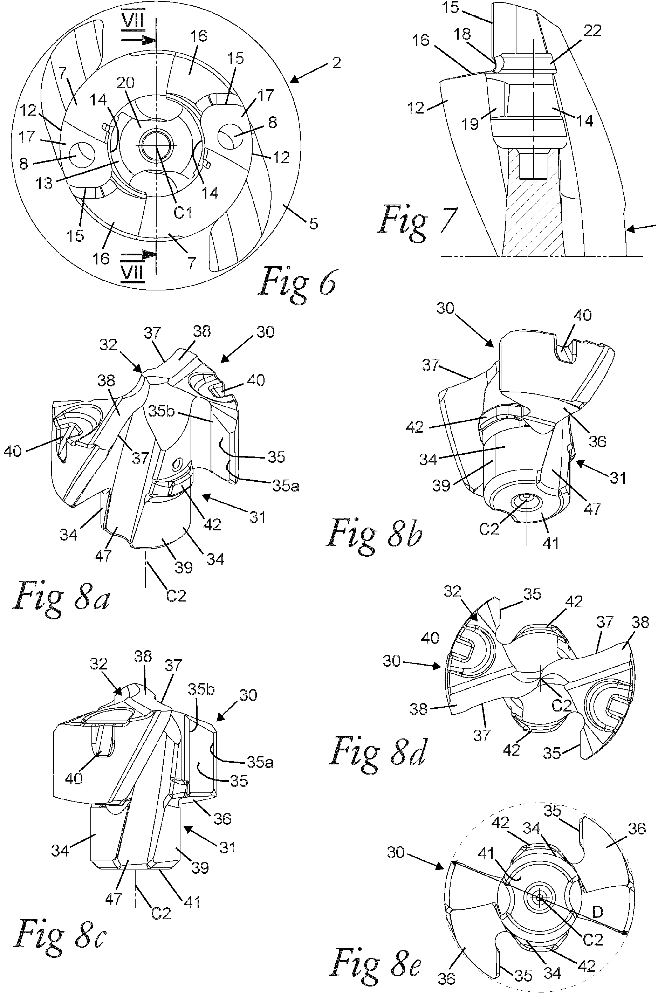

In the illustrated embodiment, each torque surface 35 is cylindrical and has a radius of curvature that is approximately three times larger than the diameter D (see Fig 8e) of the cutting head 30. The radius of curvature of the convex torque surfaces 35 is suitably larger than the diameter D (see Fig 8e) of the cutting head 30 and no more than twenty times larger than the diameter D of the cutting head 30, preferably between two and ten times larger than the diameter D of the cutting head 30.

As an alternative to the illustrated and above-described combination of flat torque transfer surfaces 15 and convex torque surface 35, the torque transfer surfaces 15 may be convex and cylindrical with a radius of curvature as defined above. In the latter case, the torque surfaces 35 are flat.

In the illustrated embodiment, each one of the torque surfaces 35 extends in parallel with the centre axis C2 of the cutting head 30 and each one of the torque transfer surfaces 15 extends in parallel with the centre axis C1 of the tool body 2. However, the torque surfaces 35 and torque transfer surfaces 15 may as an alternative be inclined in relation to the centre axis C2 of the cutting head 30 and the centre axis C1 of the tool body 2, respectively, for instance in the manner illustrated in US 7 360 974 B2.

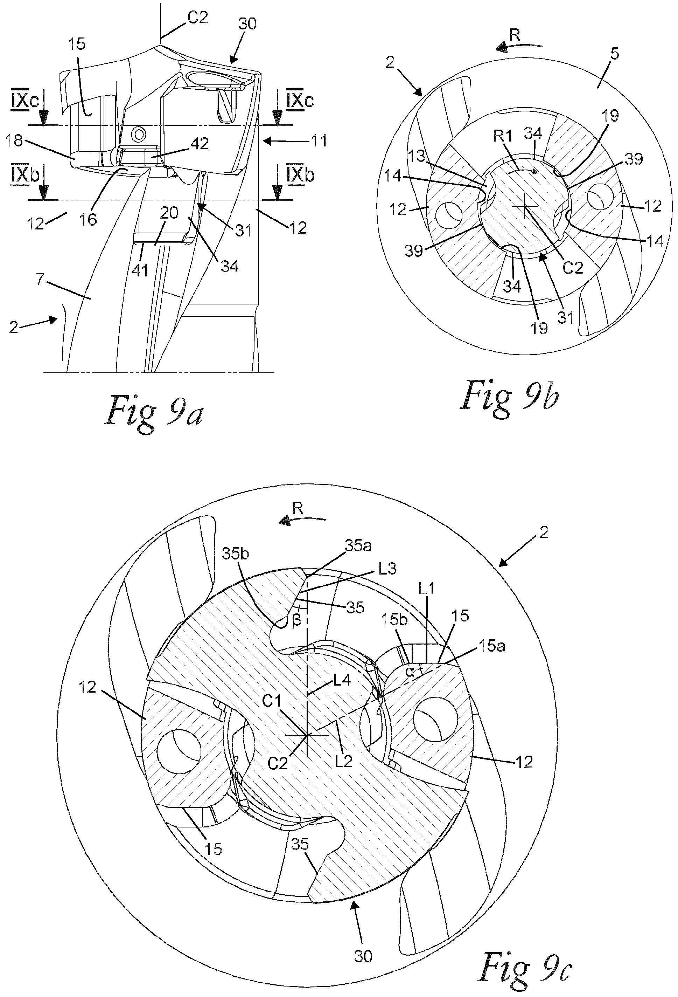

Each one of the torque transfer surfaces 15 has an outer edge 15a that extends in the axial direction of the tool body 2 and an opposite inner edge 15b that extends in the axial direction of the tool body 2 and is located closer to the centre axis C1 of the tool body 2 than said outer edge 15a. In a corresponding manner, each one of the torque surfaces 35 has an outer edge 35a that extends in the axial direction of the cutting head 30 and an opposite inner edge 35b that extends in the axial direction of the cutting head 30 and is located closer to the centre axis C2 of the cutting head 30 than the outer edge 35a of the torque surface 35. In the illustrated embodiment, each one of the torque transfer surfaces 15 has such an orientation in relation to the centre axis C1 of the tool body 2 that, as seen in any plane that is perpendicular to the centre axis C1 of the tool body 2 and extends across the torque transfer surface 15, a rectilinear first reference line L1 (see Fig 9c) that extends between the outer and inner edges 15a, 15b of the torque transfer surface 15 is, as seen in a direction along the first reference line L1 from the outer edge 15a of the torque transfer surface to the inner edge 15b thereof, inclined forward in the intended direction of rotation R of the rotary cutting tool 1 in relation to a rectilinear second reference line L2 that extends between the outer edge 15a of the torque transfer surface 15 and the centre axis C1 of the tool body 2. The angle α between said first reference line L1 and said second reference line L2 is preferably 10-30°. Furthermore, in the illustrated embodiment, each one of the torque surfaces 35 has such an orientation in relation to the centre axis C2 of the cutting head 30 that, as seen in any plane that is perpendicular to the centre axis C2 of the cutting head 30 and extends across the torque surface 35, a rectilinear third reference line L3 that extends between the outer and inner edges 35a, 35b of the torque surface 35 is, as seen in a direction along the third reference line L3 from the outer edge 35a of the torque surface to the inner edge 35b thereof, inclined forward in the intended direction of rotation R of the rotary cutting tool 1 in relation to a rectilinear fourth reference line L4 that extends between the outer edge 35a of the torque surface 35 and the centre axis C2 of the cutting head 30. The angle β between said third reference line L3 and said fourth reference line L4 is preferably 10-30° and with advantage the same, or at least essentially the same, as the angle α between said first reference line L1 and said second reference line L2.

The torque transfer surfaces 15 and the torque surfaces 35 are preferably so adapted to each other that said first and third reference lines L1, L3 extend in parallel with each other, or at least essentially in parallel with each other, at each interface between a torque transfer surface 15 and an associated torque surface 35 when the cutting head 30 is attached to the tool body 2, as seen in any cross-sectional plane through the cutting tool 1 that is perpendicular to the centre axis C1 of the tool body 2 and intersects the torque transfer surfaces 15 and the torque surfaces 35.

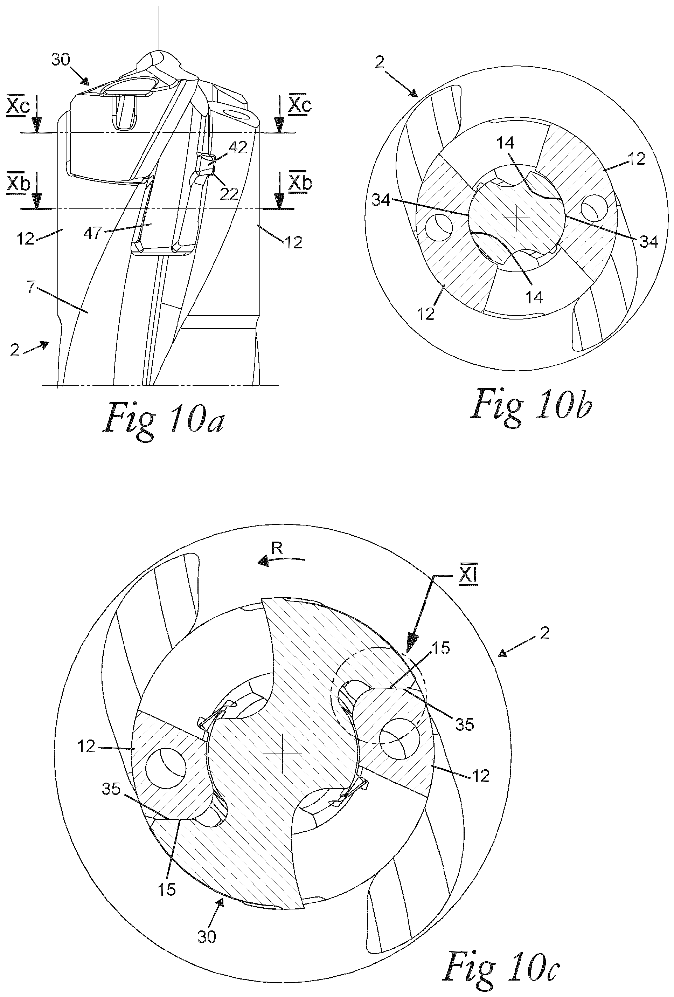

In the illustrated embodiment, the coupling portion 31 of the cutting head 30 is, when received in the space 13 between the coupling legs 12 of the tool body 2, rotatable in this space 13 about the centre axis C2 of the cutting head 30 between:
- a disengagement position (see Figs 9a-9c), in which the external clamping surfaces 34 on the coupling portion 31 of the cutting head 30 are disengaged from the internal clamping surfaces 14 on the coupling legs 12 and the torque surfaces 35 on the cutting head 30 are separated from the corresponding torque transfer surfaces 15 on the coupling legs 12, and
- an engagement position (see Figs 10a-10c), in which the external clamping surfaces 34 on the coupling portion 31 of the cutting head 30 are in press fit engagement with the internal clamping surfaces 14 on the coupling legs 12 and the torque surfaces 35 on the cutting head 30 abut against the corresponding torque transfer surfaces 15 on the coupling legs 12.

The rotation of the coupling portion 31 of the cutting head 30 from said disengagement position to said engagement position is effected by a rotation of the cutting head 30 about its centre axis C2 and in relation to the tool body 2 in a direction of rotation R1 (see Fig 9b) opposite to the intended direction of rotation R of the cutting tool 1. The rotation of the coupling portion 31 of the cutting head 30 from the engagement position to the disengagement position is effected by a rotation of the cutting head 30 about its centre axis C2 and in relation to the tool body 2 in the opposite direction.

When the coupling portion 31 of the cutting head 30 is in said disengagement position in the space 13 between the coupling legs 12, the cutting head 30 can be moved in axial direction out of the space 13 between the coupling legs 12 and away from the tool body 2. When the coupling portion 31 of the cutting head 30 is in said engagement position in the space 13 between the coupling legs 12, the cutting head 30 is locked to the tool body 2 and the cutting tool 1 is ready for machining of a workpiece. The rotation of the cutting head 30 from the disengagement position to the engagement position, or in the opposite direction from the engagement position to the disengagement position, may for instance be performed by means of an implement (not shown) in the form of a key or the similar that is temporarily connected to the cutting head 30 through notches 40 or the similar in the cutting head.

In order to facilitate the rotation of the cutting head 30 from the disengagement position to the engagement position, the coupling portion 31 of the cutting head 30 may be provided with two guide surfaces 39 arranged opposite to each other on opposite sides of the centre axis C2 of the cutting head, wherein these guide surfaces 39 adjoin to a respective one of the external clamping surfaces 34 on the coupling portion 31 of the cutting head and is arranged in front of the associated external clamping surface 34 as seen in the above-mentioned direction of rotation R1. In order to guide the external clamping surfaces 34 into engagement with the internal clamping surfaces 14 during the rotation of the coupling portion 31 of the cutting head 30 into the engagement position, a guide surface 19 is also provided on the inner side of each coupling leg 12 in front of the internal clamping surface 14 on the coupling leg as seen in the intended direction of rotation R of the cutting tool 1.

Two chip flutes 7 are formed in the peripheral surface 2c of the tool body 2 and extend, preferably helically, diametrically opposite each other and alongside of each other along a part of the tool body 2 from the collar 5 and up to the coupling portion 11 of the tool body. Each one of these chip flutes 7 extends up to an area between the two coupling legs 12 and is configured to connect to a corresponding chip flute 47 on the outside of the cutting head 30 when the coupling portion 31 of the cutting head is in the engagement position in the space 13 between the coupling legs 12. The chip flutes 7, 47 could alternatively be rectilinear instead of helical. The chip flutes 7, 47 are intended to carry away the chips generated by the cutting edges 37 during machining of a workpiece.

In the illustrated embodiment, a coolant channel 8 extends axially through each coupling leg 12 and opens into the upper end face 17 of the coupling leg.

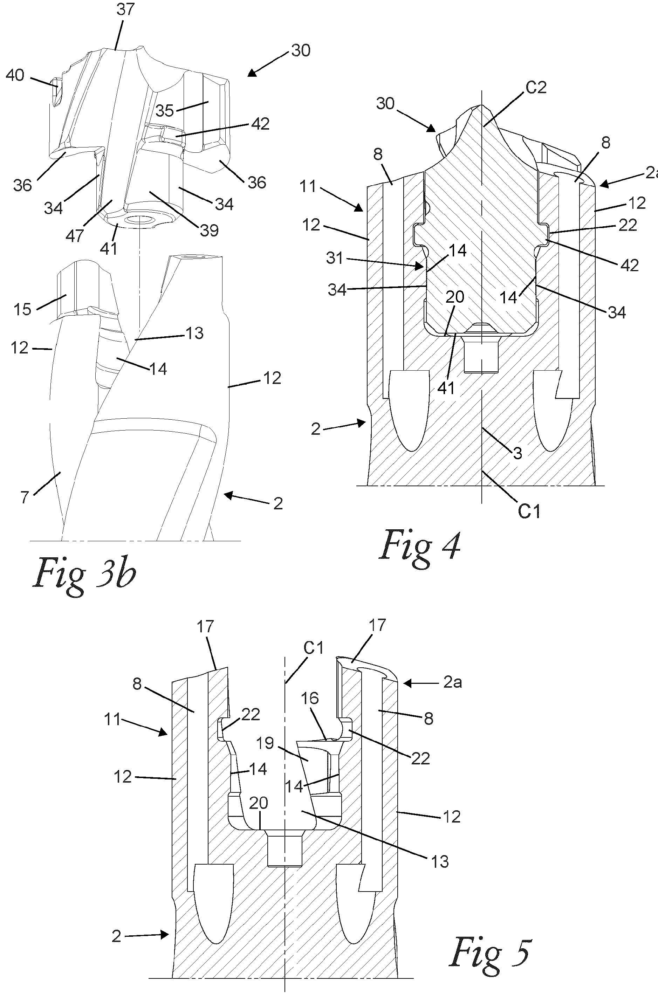

The space 13 between the coupling legs 12 has a bottom surface 20 that is formed in the tool body 2 and that extends between the coupling legs 12. The distance in axial direction between the bottom surface 20 of the space 13 and each axial support surface 16 on the coupling legs 12 is suitably somewhat larger than the distance in axial direction between a bottom surface 41 of the cutting head 30 and each axial abutment surface 36 of the cutting head, so that there is a small clearance between these bottom surfaces 20, 41 when the axial abutment surfaces 36 of the cutting head abut against the axial support surfaces 16 on the coupling legs, as illustrated in Fig 4.

In the illustrated embodiment, each coupling leg 12 is in a conventional manner provided with an axial locking member 22 that is configured to fit, preferably with play, with a corresponding axial locking member 42 on the coupling portion 31 of the cutting head 30 when the coupling portion 31 of the cutting head is in the engagement position in the space 13 between the coupling legs 12 to thereby form an axial lock between the cutting head 30 and the tool body 2 and prevent the coupling portion 31 of the cutting head 30 from moving out of the space 13 between the coupling legs in the axial direction of the tool body 2 when being in the engagement position in this space 13. The axial locking members 42 of the cutting head 30 are provided on the coupling portion 31 of the cutting head 30 opposite to each other on opposite sides of the centre axis C2 of the cutting head. In the illustrated embodiment, the axial locking member 22 of each coupling leg 12 is constituted by an elongated recess formed in the coupling leg on the inner side thereof, wherein the corresponding axial locking member 42 of the cutting head 30 is constituted by an external projection on the coupling portion 31 of the cutting head 30 that is configured to be received with play in said elongated recess. As an alternative, each axial locking member 42 of the cutting head 30 could be constituted by an elongated recess formed in the coupling portion 31 of the cutting head on the outer side thereof, wherein the corresponding axial locking member 22 of the tool body 2 is constituted by an internal projection on the inner side of a coupling leg 12 that is configured to be received with play in said elongated recess. In the illustrated embodiment, the axial locking member 22 of each coupling leg 12 is located at a position on the coupling leg 12 between the internal clamping surface 14 on the coupling leg and the upper end face 17 of the coupling leg. As an alternative, the axial locking member 22 of each coupling leg 12 could be located at a position on the coupling leg 12 between the internal clamping surface 14 on the coupling leg and the bottom surface 20 between the coupling legs 12. In the illustrated embodiment, the above-mentioned undercut groove 18 formed in each coupling leg 12 between the axial support surface 16 and the torque transfer surface 15 of the coupling leg adjoins to and is located on the coupling leg 12 in level with the elongated recess that forms the axial locking member 22 of the coupling leg 12.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A rotary cutting tool comprising an elongated tool body (2) and a replaceable cutting head (30) detachably attachable to the tool body (2), wherein:
- the tool body (2) has a rear end (2b) configured for attachment to a machine and an opposite front end (2a), wherein a longitudinal centre axis (C1) of the tool body (2) extends between the rear end (2b) and the front end (2a) of the tool body (2);
- the tool body (2) at its front end (2a) has a coupling portion (11) with two or more coupling legs (12) projecting in the axial direction of the tool body (2) and distributed about the centre axis (C1) of the tool body;
- the cutting head (30) has a coupling portion (31), which is designed for engagement with the coupling portion (11) of the tool body (2) and which is receivable in a space (13) between said coupling legs (12); and
- each coupling leg (12) is provided with a torque transfer surface (15) for transferring torque from the tool body (2) to the cutting head (30), which torque transfer surface (15) is configured to abut against a corresponding torque surface (35) on the cutting head (30) when the cutting head is attached to the tool body (2) with the coupling portion (31) of the cutting head received in said space (13) between the coupling legs (12) and with a centre axis (C2) of the cutting head (30) coinciding with the centre axis (C1) of the tool body (2),
wherein
- each one of the torque transfer surfaces (15) on the coupling legs (12) are convex, and each of the torque surfaces (35) on the cutting head (30) are flat, as seen in any plane that is perpendicular to their respective centre axis (C1, C2); or - the torque transfer surfaces (15) on each one of the coupling legs (12) are flat, and each of the torque surfaces (35) on the cutting head (30) are convex, as seen in any plane that is perpendicular to their respective centre axis (C1, C2).

2. A rotary cutting tool according to claim 1, **characterized in that** each one of said convex torque surfaces (35) and/or convex torque transfer surfaces (15) is cylindrical.

3. A rotary cutting tool according to claim 2, **characterized in that** each one of said convex torque surfaces (35) and/or convex torque transfer surfaces (15) has a radius of curvature that is larger than the diameter (D) of the cutting head (30) and no more than twenty times larger than the diameter (D) of the cutting head (30), preferably between two and ten times larger than the diameter (D) of the cutting head (30).

4. A rotary cutting tool according to any of claims 1-3, **characterized in that** each one of said torque surfaces (35) extends in parallel with the centre axis (C2) of the cutting head (30), and that each one of said torque transfer surfaces (15) extends in parallel with the centre axis (C1) of the tool body (2).

5. A rotary cutting tool according to any of claims 1-4, **characterized in that** said coupling legs (12) are two in number and arranged opposite to each other on opposite sides of the centre axis (C1) of the tool body (2), and that said torque surfaces (35) on the cutting head (30) are two in number and arranged on opposite sides of the centre axis (C2) of the cutting head.

6. A rotary cutting tool according to claim 5, **characterized in:**
- **that** two convex external clamping surfaces (34) are provided on the coupling portion (31) of the cutting head (30) opposite to each other on opposite sides of the centre axis (C2) of the cutting head, wherein these external clamping surfaces (34) are configured to be in press fit engagement with an internal clamping surface (14) on an inner side of a respective one of the coupling legs (12) when the cutting head (30) is attached to the tool body (2); and
- **that** the coupling portion (31) of the cutting head (30) is rotatable in said space (13) between the coupling legs (12) about the centre axis (C2) of the cutting head (30) between a disengagement position, in which the external clamping surfaces (34) on the coupling portion (31) of the cutting head (30) are disengaged from the internal clamping surfaces (14) on the coupling legs (12) and the torque surfaces (35) on the cutting head (30) are separated from the corresponding torque transfer surfaces (15) on the coupling legs (12), and an engagement position, in which the external clamping surfaces (34) on the coupling portion (31) of the cutting head (30) are in press fit engagement with the internal clamping surfaces (14) on the coupling legs (12) and the torque surfaces (35) on the cutting head (30) abut against the corresponding torque transfer surfaces (15) on the coupling legs (12).

7. A rotary cutting tool according to claim 6, **characterized in that** each one of the coupling legs (12) is provided with an axial locking member (22) that is configured to fit with a corresponding axial locking member (42) on the coupling portion (31) of the cutting head (30) when the coupling portion (31) of the cutting head is in said engagement position in said space (13) between the coupling legs (12) to thereby form an axial lock between the cutting head (30) and the tool body (2) and prevent the coupling portion (31) of the cutting head (30) from moving out of the space (13) between the coupling legs (12) in the axial direction of the tool body (2) when being in said engagement position in this space (13).

8. A rotary cutting tool according to claim 7, **characterized in that** the axial locking member (22) of each coupling leg (12) has the form of an elongated recess formed in the coupling leg (12) on the inner side thereof, wherein the corresponding axial locking member (42) of the cutting head (30) has the form of an external projection on the coupling portion (31) of the cutting head.

9. A rotary cutting tool according to any of claims 1-8, **characterized in:**
- **that** each one of said torque transfer surfaces (15) has an outer edge (15a) that extends in the axial direction of the tool body (2) and an opposite inner edge (15b) that extends in the axial direction of the tool body (2) and is located closer to the centre axis (C1) of the tool body (2) than said outer edge (15a); and
- **that** each one of said torque transfer surfaces (15) has such an orientation in relation to the centre axis (C1) of the tool body (2) that, as seen in any plane that is perpendicular to the centre axis (C1) of the tool body (2) and extends across the torque transfer surface (15), a rectilinear first reference line (L1) that extends from the outer edge (15a) of the torque transfer surface (15) to the inner edge (15b) thereof is inclined forward in an intended direction of rotation (R) of the rotary cutting tool (1), as seen in a direction along the first reference line (L1) from the outer edge (15a) of the torque transfer surface (15) to the inner edge (15b) thereof, in relation to a rectilinear second reference line (L2) that extends from the outer edge (15a) of the torque transfer surface (15) to the centre axis (C1) of the tool body (2).

10. A rotary cutting tool according to claim 9, **characterized in that** the angle (α) between said first reference line (L1) and said second reference line (L2) is 10-30°.

11. A rotary cutting tool according to claim 9 or 10, **characterized in:**
- **that** each one of said torque surfaces (35) has an outer edge (35a) that extends in the axial direction of the cutting head (30) and an opposite inner edge (35b) that extends in the axial direction of the cutting head (30) and is located closer to the centre axis (C2) of the cutting head (30) than the outer edge (35a) of the torque surface (35); and
- **that** each one of said torque surfaces (35) has such an orientation in relation to the centre axis (C2) of the cutting head (30) that, as seen in any plane that is perpendicular to the centre axis (C2) of the cutting head (30) and extends across the torque surface (35), a rectilinear third reference line (L3) that extends from the outer edge (35a) of the torque surface (35) to the inner edge (35b) thereof is inclined forward in the intended direction of rotation (R) of the rotary cutting tool (1), as seen in a direction along the third reference line (L3) from the outer edge (35a) of the torque surface (35) to the inner edge (35b) thereof, in relation to a rectilinear fourth reference line (L4) that extends from the outer edge (35a) of the torque surface (35) to the centre axis (C2) of the cutting head (30).

12. A rotary cutting tool according to claim 11, **characterized in that** the angle (β) between said third reference line (L3) and said fourth reference line (L4) is the same, or at least essentially the same, as the angle (α) between said first reference line (L1) and said second reference line (L2).

13. A rotary cutting tool according to any of claims 1-12, **characterized in that** each one of the coupling legs (12) is provided with an axial support surface (16) that is facing axially forward and configured to abut against a corresponding axial abutment surface (36) on the cutting head (30) when the cutting head it attached to the tool body (2).

## Patentansprüche

1. Rotationsschneidwerkzeug, umfassend einen länglichen Werkzeugkörper (2) und einen austauschbaren Schneidkopf (30), der abnehmbar an dem Werkzeugkörper (2) befestigt werden kann, wobei
- der Werkzeugkörper (2) ein hinteres Ende (2b), das zur Befestigung an einer Maschine ausgebildet ist, und ein gegenüberliegendes vorderes Ende (2a) aufweist, wobei sich eine Längsmittelachse (C1) des Werkzeugkörpers (2) zwischen dem hinteren Ende (2b) und dem vorderen Ende (2a) des Werkzeugkörpers (2) erstreckt;
- der Werkzeugkörper (2) an seinem vorderen Ende (2a) einen Kupplungsabschnitt (11) mit zwei oder mehr Kupplungsschenkeln (12) aufweist, die in axialer Richtung des Werkzeugkörpers (2) vorstehen und um die Mittelachse (C1) des Werkzeugkörpers verteilt sind;
- der Schneidkopf (30) einen Kupplungsabschnitt (31) aufweist, der zum Eingriff mit dem Kupplungsabschnitt (11) des Werkzeugkörpers (2) ausgelegt ist und in einem Raum (13) zwischen den Kupplungsschenkeln (12) aufnehmbar ist; und
- jeder Kupplungsschenkel (12) mit einer Drehmomentübertragungsfläche (15) zum Übertragen eines Drehmoments vom Werkzeugkörper (2) auf den Schneidkopf (30) versehen ist, wobei die Drehmomentübertragungsfläche (15) so ausgestaltet ist, dass sie an einer entsprechenden Drehmomentfläche (35) am Schneidkopf (30) anliegt, wenn der Schneidkopf am Werkzeugkörper (2) befestigt ist, wobei der Kupplungsabschnitt (31) des Schneidkopfes in dem Raum (13) zwischen den Kupplungsschenkeln (12) aufgenommen ist und die Mittelachse (C2) des Schneidkopfes (30) mit der Mittelachse (C1) des Werkzeugkörpers (2) zusammenfällt,
wobei jede der Drehmomentübertragungsflächen (15) an den Kupplungsschenkeln (12) konvex ist und jede der Drehmomentflächen (35) am Schneidkopf (30) flach ist, gesehen in jeder Ebene, die senkrecht zu ihrer jeweiligen Mittelachse (C1, C2) steht; oder
die Drehmomentübertragungsflächen (15) an jedem der Kupplungsschenkel (12) flach sind und jede der Drehmomentflächen (35) am Schneidkopf (30) konvex ist, gesehen in jeder Ebene, die senkrecht zu ihrer jeweiligen Mittelachse (C1, C2) steht.

2. Rotationsschneidwerkzeug nach Anspruch 1, **dadurch gekennzeichnet, dass** jede der konvexen Drehmomentflächen (35) und/oder konvexen Drehmomentübertragungsflächen (15) zylindrisch ist.

3. Rotationsschneidwerkzeug nach Anspruch 2, **dadurch gekennzeichnet, dass** jede der konvexen Drehmomentflächen (35) und/oder der konvexen Drehmomentübertragungsflächen (15) einen Krümmungsradius aufweist, der größer ist als der Durchmesser (D) des Schneidkopfes (30) und nicht mehr als zwanzigmal größer als der Durchmesser (D) des Schneidkopfes (30), vorzugsweise zwischen dem Zweifachen und dem Zehnfachen des Durchmessers (D) des Schneidkopfes (30).

4. Rotationsschneidwerkzeug nach einem der Ansprüche 1 bis 3, **dadurch gekennzeichnet, dass** jede der Drehmomentflächen (35) parallel zur Mittelachse (C2) des Schneidkopfes (30) verläuft und dass jede der Drehmomentübertragungsflächen (15) parallel zur Mittelachse (C1) des Werkzeugkörpers (2) verläuft.

5. Rotationsschneidwerkzeug nach einem der Ansprüche 1 bis 4, **dadurch gekennzeichnet, dass** die Anzahl der Kupplungsschenkel (12) zwei beträgt und einander gegenüberliegend auf gegenüberliegenden Seiten der Mittelachse (C1) des Werkzeugkörpers (2) angeordnet sind, und dass die Anzahl der Drehmomentflächen (35) am Schneidkopf (30) zwei beträgt und auf gegenüberliegenden Seiten der Mittelachse (C2) des Schneidkopfes angeordnet sind.

6. Rotationsschneidwerkzeug nach Anspruch 5, **dadurch gekennzeichnet,**
- **dass** zwei konvexe äußere Klemmflächen (34) an dem Kupplungsabschnitt (31) des Schneidkopfes (30) einander gegenüberliegend auf gegenüberliegenden Seiten der Mittelachse (C2) des Schneidkopfes vorgesehen sind, wobei diese äußeren Klemmflächen (34) so ausgebildet sind, dass sie in Presssitz mit einer inneren Klemmfläche (14) an einer Innenseite eines jeweiligen der Kupplungsschenkel (12) in Eingriff stehen, wenn der Schneidkopf (30) am Werkzeugkörper (2) befestigt ist; und
- **dass** der Kupplungsabschnitt (31) des Schneidkopfes (30) in dem Raum (13) zwischen den Kupplungsschenkeln (12) um die Mittelachse (C2) des Schneidkopfes (30) zwischen einer Ausrückposition, in der die äußeren Klemmflächen (34) am Kupplungsabschnitt (31) des Schneidkopfes (30) von den inneren Klemmflächen (14) an den Kupplungsschenkeln (12) gelöst sind und die Drehmomentflächen (35) am Schneidkopf (30) von den entsprechenden Drehmomentübertragungsflächen (15) an den Kupplungsschenkeln (12) getrennt sind, und einer Eingriffsposition, in der die äußeren Klemmflächen (34) am Kupplungsabschnitt (31) des Schneidkopfes (30) in Presssitz mit den inneren Klemmflächen (14) an den Kupplungsschenkeln (12) in Eingriff stehen und die Drehmomentflächen (35) am Schneidkopf (30) an den entsprechenden Drehmomentübertragungsflächen (15) an den Kupplungsschenkeln (12) anliegen.

7. Rotationsschneidwerkzeug nach Anspruch 6, **dadurch gekennzeichnet, dass** jeder der Kupplungsschenkel (12) mit einem axialen Verriegelungselement (22) versehen ist, das so ausgestaltet ist, dass es mit einem entsprechenden axialen Verriegelungselement (42) am Kupplungsabschnitt (31) des Schneidkopfes (30) in Eingriff kommt, wenn sich der Kupplungsabschnitt (31) des Schneidkopfes in der Eingriffsposition in dem Raum (13) zwischen den Kupplungsschenkeln (12) befindet, um dadurch eine axiale Verriegelung zwischen dem Schneidkopf (30) und dem Werkzeugkörper (2) zu bilden und zu verhindern, dass sich der Kupplungsabschnitt (31) des Schneidkopfes (30) aus dem Raum (13) zwischen den Kupplungsschenkeln (12) in axialer Richtung des Werkzeugkörpers (2) herausbewegt, wenn er sich in der Eingriffsposition in diesem Raum (13) befindet.

8. Rotationsschneidwerkzeug nach Anspruch 7, **dadurch gekennzeichnet, dass** das axiale Verriegelungselement (22) jedes Kupplungsbeins (12) die Form einer länglichen Aussparung hat, die in dem Kupplungsbein (12) an dessen Innenseite ausgebildet ist, wobei das entsprechende axiale Verriegelungselement (42) des Schneidkopfs (30) die Form eines Außenvorsprungs an dem Kupplungsabschnitt (31) des Schneidkopfs hat.

9. Rotationsschneidwerkzeug nach einem der Ansprüche 1 bis 8, **dadurch gekennzeichnet,**
- **dass** jede der Drehmomentübertragungsflächen (15) eine Außenkante (15a), die sich in axialer Richtung des Werkzeugkörpers (2) erstreckt, und eine gegenüberliegende Innenkante (15b) aufweist, die sich in axialer Richtung des Werkzeugkörpers (2) erstreckt und näher an der Mittelachse (C1) des Werkzeugkörpers (2) liegt als die Außenkante (15a); und
- **dass** jede der Drehmomentübertragungsflächen (15) in Bezug auf die Mittelachse (C1) des Werkzeugkörpers (2) eine solche Ausrichtung aufweist, dass, gesehen in einer beliebigen Ebene, die senkrecht zur Mittelachse (C1) des Werkzeugkörpers (2) steht und sich über die Drehmomentübertragungsfläche (15) erstreckt, wobei eine geradlinige erste Referenzlinie (L1), die sich von der Außenkante (15a) der Drehmomentübertragungsfläche (15) zu deren Innenkante (15b) erstreckt, in einer beabsichtigten Drehrichtung (R) des rotierenden Schneidwerkzeugs (1) nach vorne geneigt ist, in einer Richtung entlang der ersten Referenzlinie (L1) von der Außenkante (15a) der Drehmomentübertragungsfläche (15) zu deren Innenkante (15b) gesehen, in Bezug auf eine geradlinige zweite Referenzlinie (L2), die sich von der Außenkante (15a) der Drehmomentübertragungsfläche (15) zur Mittelachse (C1) des Werkzeugkörpers (2) erstreckt.

10. Rotationsschneidwerkzeug nach Anspruch 9, **dadurch gekennzeichnet, dass** der Winkel (α) zwischen der ersten Referenzlinie (L1) und der zweiten Referenzlinie (L2) 10-30° beträgt.

11. Rotationsschneidwerkzeug nach Anspruch 9 oder 10, **dadurch gekennzeichnet,**
- **dass** jede der Drehmomentflächen (35) eine Außenkante (35a) aufweist, die sich in axialer Richtung des Schneidkopfes (30) erstreckt, und eine gegenüberliegende Innenkante (35b), die sich in axialer Richtung des Schneidkopfes (30) erstreckt und näher an der Mittelachse (C2) des Schneidkopfes (30) liegt als die Außenkante (35a) der Drehmomentfläche (35); und
- **dass** jede der Drehmomentflächen (35) in Bezug auf die Mittelachse (C2) des Schneidkopfes (30) eine solche Ausrichtung aufweist, dass, gesehen in einer beliebigen Ebene, die senkrecht zur Mittelachse (C2) des Schneidkopfes (30) steht und sich über die Drehmomentfläche (35) erstreckt, eine geradlinige dritte Referenzlinie (L3), die sich von der Außenkante (35a) der Drehmomentfläche (35) zu deren Innenkante (35b) erstreckt, in der beabsichtigten Drehrichtung (R) des rotierenden Schneidwerkzeugs (1) nach vorne geneigt ist, in einer Richtung entlang der dritten Referenzlinie (L3) von der Außenkante (35a) der Drehmomentfläche (35) zu deren Innenkante (35b) gesehen, in Bezug auf eine geradlinige vierte Referenzlinie (L4), die sich von der Außenkante (35a) der Drehmomentfläche (35) zur Mittelachse (C2) des Schneidkopfes (30) erstreckt.

12. Rotationsschneidwerkzeug nach Anspruch 11, **dadurch gekennzeichnet, dass** der Winkel (β) zwischen der dritten Referenzlinie (L3) und der vierten Referenzlinie (L4) gleich oder zumindest im Wesentlichen gleich dem Winkel (α) zwischen der ersten Referenzlinie (L1) und der zweiten Referenzlinie (L2) ist.

13. Rotationsschneidwerkzeug nach einem der Ansprüche 1 bis 12, **dadurch gekennzeichnet, dass** jeder der Kupplungsschenkel (12) mit einer axialen Stützfläche (16) versehen ist, die axial nach vorne gerichtet ist und so ausgestaltet ist, dass sie an einer entsprechenden axialen Anschlagfläche (36) am Schneidkopf (30) anliegt, wenn der Schneidkopf am Werkzeugkörper (2) befestigt ist.

## Revendications

1. Outil de coupe rotatif comprenant un corps d'outil allongé (2) et une tête de coupe remplaçable (30) pouvant être fixée de manière détachable au corps d'outil (2), dans lequel :
- le corps d'outil (2) présente une extrémité arrière (2b) configurée pour être fixée à une machine et une extrémité avant opposée (2a), un axe central longitudinal (C1) du corps d'outil (2) s'étendant entre l'extrémité arrière (2b) et l'extrémité avant (2a) du corps d'outil (2) ;
- le corps d'outil (2), à son extrémité avant (2a), présente une partie de couplage (11) avec au moins deux pattes de couplage (12) s'étendant dans la direction axiale du corps d'outil (2) et réparties autour de l'axe central (C1) du corps d'outil ;
- la tête de coupe (30) présente une partie de couplage (31), qui est conçue pour s'engager avec la partie de couplage (11) du corps d'outil (2) et qui peut être reçue dans un espace (13) entre lesdites pattes de couplage (12) ; et
- chaque patte de couplage (12) est pourvue d'une surface de transmission de couple (15) pour transmettre le couple du corps d'outil (2) à la tête de coupe (30), laquelle surface de transmission de couple (15) est configurée pour venir en butée contre une surface de couple correspondante (35) sur la tête de coupe (30) lorsque la tête de coupe est fixée au corps d'outil (2) avec la partie de couplage (31) de la tête de coupe reçue dans ledit espace (13) entre les pattes de couplage (12) et avec un axe central (C2) de la tête de coupe (30) coïncidant avec l'axe central (C1) du corps d'outil (2), dans lequel
- chacune des surfaces de transmission de couple (15) sur les pattes de couplage (12) est convexe, et chacune des surfaces de couple (35) sur la tête de coupe (30) est plate, vues dans tout plan qui est perpendiculaire à leur axe central respectif (C1, C2) ; ou
- les surfaces de transmission de couple (15) sur chacune des pattes de couplage (12) sont plates, et chacune des surfaces de couple (35) sur la tête de coupe (30) est convexe, vues dans tout plan qui est perpendiculaire à leur axe central respectif (C1, C2).

2. Outil de coupe rotatif selon la revendication 1, **caractérisé en ce que** chacune desdites surfaces de couple convexes (35) et/ou surfaces de transmission de couple convexes (15) est cylindrique.

3. Outil de coupe rotatif selon la revendication 2, **caractérisé en ce que** chacune desdites surfaces de couple convexes (35) et/ou surfaces de transmission de couple convexes (15) présente un rayon de courbure supérieur au diamètre (D) de la tête de coupe (30) et au plus vingt fois supérieur au diamètre (D) de la tête de coupe (30), de préférence entre deux et dix fois supérieur au diamètre (D) de la tête de coupe (30).

4. Outil de coupe rotatif selon l'une quelconque des revendications 1 à 3, **caractérisé en ce que** chacune desdites surfaces de couple (35) s'étend parallèlement à l'axe central (C2) de la tête de coupe (30), et **en ce que** chacune desdites surfaces de transmission de couple (15) s'étend parallèlement à l'axe central (C1) du corps d'outil (2).

5. Outil de coupe rotatif selon l'une quelconque des revendications 1 à 4, **caractérisé en ce que** lesdites pattes de couplage (12) sont au nombre de deux et disposées l'une en face de l'autre de part et d'autre de l'axe central (C1) du corps d'outil (2), et **en ce que** lesdites surfaces de couple (35) sur la tête de coupe (30) sont au nombre de deux et disposées de part et d'autre de l'axe central (C2) de la tête de coupe.

6. Outil de coupe rotatif selon la revendication 5, **caractérisé en ce que** :
- deux surfaces de serrage externes convexes (34) sont prévues sur la partie de couplage (31) de la tête de coupe (30), disposées l'une en face de l'autre de part et d'autre de l'axe central (C2) de la tête de coupe, lesquelles surfaces de serrage externes (34) sont configurées pour être en ajustement serré avec une surface de serrage interne (14) sur un côté intérieur respectif de chacune des pattes de couplage (12) lorsque la tête de coupe (30) est fixée au corps d'outil (2) ; et
- la partie de couplage (31) de la tête de coupe (30) est apte à tourner dans ledit espace (13) entre les pattes de couplage (12) autour de l'axe central (C2) de la tête de coupe (30) entre une position de désengagement, dans laquelle les surfaces de serrage externes (34) sur la partie de couplage (31) de la tête de coupe (30) sont désengagées des surfaces de serrage internes (14) sur les pattes de couplage (12) et les surfaces de couple (35) sur la tête de coupe (30) sont séparées des surfaces de transmission de couple correspondantes (15) sur les pattes de couplage (12), et une position d'engagement, dans laquelle les surfaces de serrage externes (34) sur la partie de couplage (31) de la tête de coupe (30) sont en ajustement serré avec les surfaces de serrage internes (14) sur les pattes de couplage (12) et les surfaces de couple (35) sur la tête de coupe (30) viennent en butée contre les surfaces de transmission de couple correspondantes (15) sur les pattes de couplage (12).

7. Outil de coupe rotatif selon la revendication 6, **caractérisé en ce que** chacune des pattes de couplage (12) est pourvue d'un élément de verrouillage axial (22) qui est configuré pour s'adapter à un élément de verrouillage axial correspondant (42) sur la partie de couplage (31) de la tête de coupe (30) lorsque la partie de couplage (31) de la tête de coupe est dans ladite position d'engagement dans ledit espace (13) entre les pattes de couplage (12) afin de former ainsi un verrouillage axial entre la tête de coupe (30) et le corps d'outil (2) et d'empêcher la partie de couplage (31) de la tête de coupe (30) de sortir de l'espace (13) entre les pattes de couplage (12) dans la direction axiale du corps d'outil (2) lorsqu'elle est dans ladite position d'engagement dans cet espace (13).

8. Outil de coupe rotatif selon la revendication 7, **caractérisé en ce que** l'élément de verrouillage axial (22) de chaque patte de couplage (12) a la forme d'un évidement allongé formé dans la patte de couplage (12) sur sa face intérieure, ledit élément de verrouillage axial correspondant (42) de la tête de coupe (30) ayant la forme d'une saillie externe sur la partie de couplage (31) de la tête de coupe.

9. Outil de coupe rotatif selon l'une quelconque des revendications 1 à 8, **caractérisé en ce que** : - chacune desdites surfaces de transmission de couple (15) présente un bord extérieur (15a) qui s'étend dans la direction axiale du corps d'outil (2) et un bord intérieur opposé (15b) qui s'étend dans la direction axiale du corps d'outil (2) et est situé plus près de l'axe central (C1) du corps d'outil (2) que ledit bord extérieur (15a) ; et
- chacune desdites surfaces de transmission de couple (15) présente une orientation telle, par rapport à l'axe central (C1) du corps d'outil (2), que, vue dans tout plan qui est perpendiculaire à l'axe central (C1) du corps d'outil (2) et s'étend à travers la surface de transmission de couple (15), une première ligne de référence rectiligne (L1) qui s'étend du bord extérieur (15a) de la surface de transmission de couple (15) au bord intérieur (15b) de celle-ci est inclinée vers l'avant dans une direction de rotation prévue (R) de l'outil de coupe rotatif (1), vue dans une direction le long de la première ligne de référence (L1) du bord extérieur (15a) de la surface de transmission de couple (15) vers le bord intérieur (15b) de celle-ci, par rapport à une deuxième ligne de référence rectiligne (L2) qui s'étend du bord extérieur (15a) de la surface de transmission de couple (15) vers l'axe central (C1) du corps d'outil (2).

10. Outil de coupe rotatif selon la revendication 9, **caractérisé en ce que** l'angle (α) entre ladite première ligne de référence (L1) et ladite deuxième ligne de référence (L2) est de 10 à 30°.

11. Outil de coupe rotatif selon la revendication 9 ou 10, **caractérisé en ce que** :
- chacune desdites surfaces de couple (35) présente un bord extérieur (35a) qui s'étend dans la direction axiale de la tête de coupe (30) et un bord intérieur opposé (35b) qui s'étend dans la direction axiale de la tête de coupe (30) et est situé plus près de l'axe central (C2) de la tête de coupe (30) que le bord extérieur (35a) de la surface de couple (35) ; et
- chacune desdites surfaces de couple (35) présente une orientation telle, par rapport à l'axe central (C2) de la tête de coupe (30), que, vue dans tout plan qui est perpendiculaire à l'axe central (C2) de la tête de coupe (30) et s'étend à travers la surface de couple (35), une troisième ligne de référence rectiligne (L3) qui s'étend du bord extérieur (35a) de la surface de couple (35) au bord intérieur (35b) de celle-ci est inclinée vers l'avant dans la direction de rotation prévue (R) de l'outil de coupe rotatif (1), vue dans une direction le long de la troisième ligne de référence (L3) du bord extérieur (35a) de la surface de couple (35) vers le bord intérieur (35b) de celle-ci, par rapport à une quatrième ligne de référence rectiligne (L4) qui s'étend du bord extérieur (35a) de la surface de couple (35) vers l'axe central (C2) de la tête de coupe (30).

12. Outil de coupe rotatif selon la revendication 11, **caractérisé en ce que** l'angle (β) entre ladite troisième ligne de référence (L3) et ladite quatrième ligne de référence (L4) est identique, ou du moins essentiellement identique, à l'angle (α) entre ladite première ligne de référence (L1) et ladite deuxième ligne de référence (L2).

13. Outil de coupe rotatif selon l'une quelconque des revendications 1 à 12, **caractérisé en ce que** chacune des pattes de couplage (12) est pourvue d'une surface d'appui axiale (16) qui est orientée axialement vers l'avant et configurée pour venir en butée contre une surface de butée axiale correspondante (36) sur la tête de coupe (30) lorsque la tête de coupe est fixée au corps d'outil (2).
